# EUROPÄISCHE PATENTSCHRIFT

(11) **EP 1 038 833 B1**
(45) Veröffentlichungstag und Bekanntmachung des Hinweises auf die Patenterteilung: **14.05.2003**
(21) Anmeldenummer: 00104601.0
(22) Anmeldetag: 02.03.2000
(51) Int. Cl.: C01B 15/029

(54) **Verfahren zur Herstellung von Wasserstoffperoxid durch Direktsynthese**
Process for the preparation of hydrogen peroxide by direct synthesis
Procédé de préparation d 'eau oxygenée par synthèse directe

(30) Priorität: 20.03.1999 DE 19912733
(43) Veröffentlichungstag der Anmeldung: 27.09.2000
(73) Patentinhaber: Degussa AG, 40474 Düsseldorf (DE)
(72) Erfinder: Bertsch-Frank, Birgit, Dr., 63584 Gründau (DE); Hemme, Ina, Dr., 63450 Hanau (DE); Von Hippel, Lukas, Dr., 63755 Alzenau (DE); Katusic, Stipan, 65779 Kelkheim (DE)

(56) Entgegenhaltungen:
- EP-A- 0 274 830
- EP-A- 0 591 881
- EP-A- 0 593 167
- DE-A- 19 647 038
- DE-C- 19 545 455
- US-A- 5 525 570

## Beschreibung

Die Erfindung betrifft ein Verfahren zur Herstellung von Wasserstoffperoxid durch Direktsynthese aus Wasserstoff und Sauerstoff in Gegenwart eines heterogenen, mindestens ein Edelmetall, insbesondere Palladium, als katalytisch wirksame Komponente enthaltenden Katalysators in An- oder Abwesenheit eines Lösungsmittels. Durch Verwendung eines erfindungsgemäßen Katalysators ergeben sich gegenüber der Verwendung eines vorbekannten Katalysators Vorteile bezüglich der H₂-Selektivität und/oder der erreichbaren H₂O₂-Konzentration.

Die direkte Synthese von Wasserstoffperoxid durch Umsetzung von Wasserstoff mit Sauerstoff in einem sauren wäßrigen Medium in Gegenwart eines Edelmetall-Trägerkatalysators ist aus verschiedenen Dokumenten bekannt - beispielhaft wird auf die EP-B 0 274 830 verwiesen. Bei dem in diesem Dokument beschriebenen und auch in den dort zitierten Verfahren wird ein wäßriges Reaktionsmedium eingesetzt das zum Zwecke der Inhibierung der Zersetzung von gebildetem Wasserstoffperoxid eine starke Säure, wie H₂SO₄ und/oder HCl enthält. Pd auf Aktivkohle oder andere Pd und/oder Pt enthaltende heterogene Katalysatoren katalysieren die Umsetzung. Durch den Zusatz eines Bromid-Promotors wird die Selektivität erhöht. Diesem Verfahren haften verschiedene Probleme an, darunter eine zu niedrige Selektivität und/oder eine zu geringe erreichbare H₂O₂-Konzentration und/oder eine niedrige Raum-Zeit-Ausbeute, teilweise auch ein hoher Katalysatoraustrag, wodurch der technische Aufwand zur Rückgewinnung des Katalysators zunimmt und die H₂-Selektivität mit zunehmender Standzeit abnimmt.

Viele Dokumente richten sich demgemäß auf die Bereitstellung verbesserter Katalysatoren für das gattungsgemäße Verfahren. Im Verfahren gemäß EP-A 0 366 419 wird ein H₂ und O₂ enthaltendes Gasgemisch über ein_in einem Rieselbettreaktor angeordnetes Katalysatorbett geleitet, während gleichzeitig im Gleichstrom eine H₂SO₄ und HCl enthaltende wäßrige Phase über das Katalysatorbett rieselt. Zwar wird bei diesem Verfahren unter Verwendung eines auf einem hydrophoben Träger gebundenen Edelmetallkatalysators unter den üblichen Druck- und Temperaturbedingungen eine hohe Selektivität erzielt, dieser steht aber als Nachteil einer sehr niedrigen H₂O₂-Konzentration (0,15 bis 0,3 %) entgegen. Zur Gewinnung marktüblicher H₂O₂-Lösungen müssen sich aufwendige und damit die Wirtschaftlichkeit mindernde Konzentrierungs und/oder Destillationsstufen anschließen.

Im Verfahren gemäß JP-A 7-241473 werden bei herkömmlicher Reaktionsführung Wasserstoff und Sauerstoff in einem sauren wäßrigen Medium in Gegenwart eines auf hydrophobe Teilchen aufgebrachte Katalysatorpartikel mit einer Korngröße unter 50 nm zur Reaktion gebracht. Bei den Katalysator-Partikeln handelt es sich um Goldpartikel, bei dem hydrophoben Träger um hydrophobe oder hydrophobierte organische und anorganische Stoffe. Die Herstellung des Goldpartikel enthaltenden hydrophoben Trägers umfaßt eine Ausfällung eines basischen Goldsalzes auf dem hydrophoben Träger aus einer HAuCl₄ enthaltenden wäßrigen Lösung und einen Reduktions- und/oder Kalzinierungsschritt zur Überführung der Goldverbindung in elementares Gold. In einem Rieselbettreaktor wird mit 80 %iger Selektivität eine 4,8 gew.-%ige wäßrige Wasserstoffperoxidlösung gewonnen.

Ein weiteres Rieselbettverfahren lehrt die EP-A 0 579 109: Hierbei rieselt eine wäßrige Phase im Gleichstrom zum eingesetzten H₂ und O₂ enthaltenden Gasgemisch über ein Katalysatorbett auf der Basis eines an Aktivkohle, einem anorganischen Oxid oder einem Sulfat gebundenen Edelmetalls. Wesentlich ist die Einhaltung eines bestimmten Volumenverhältnisses der Gasphase zur Flüssigphase. Bei guter Selektivität bezüglich H₂ wird eine wäßrige Wasserstoffperoxidlösung mit einem Gehalt um etwa 5 Gew.-% erhalten. Eine Steigerung der H₂O₂-Konzentration gelingt gemäß dem in der Patentanmeldung DE 198 16 297.9 beschriebenen Verfahren, wobei dem Reaktor ein Wasserstoff und Sauerstoff enthaltendes Gasgemisch zugeführt wird, das an Wasserdampf im wesentlichen gesättigt oder übersättigt ist, und sich die wäßrige Phase erst durch Kondensation bildet. In diesem Verfahren werden bekannte Katalysatoren eingesetzt, im wesentlichen solche mit einem oder mehreren Elementen der 8. und/oder 1. Nebengruppe des Periodensystems. Die katalytisch wirksamen Elemente sind üblicherweise an einem teilchenförmigen oder monolytischen Träger gebunden.

Bei der Nacharbeitung des Beispiels der EP-A 0 579 109 zeigte sich, daß bei Verwendung eines Katalysators auf der Basis von 2 Gew.-% Pd auf Aktivkohle mit dem wäßrigen Wasserstoffperoxid ein hoher Palladiumaustrag erfolgt, was die Standzeit des Katalysators verkürzt.

Gemäß DE-A 41 27 918 wird als Katalysator für die gattungsgemäße Reaktion eine Palladium/Gold-Legierung mit einem Gehalt von 5 bis 95 Gew.-% Gold auf einem festen Träger wie Kohlenstoff oder Aluminiumoxid eingesetzt, um eine hohe Bildungsgegeschwindigkeit, Ausbeute und hohe Selektivität zu erhalten. Die Herstellung des Katalysators erfordert einen zweistufigen Prozeß. Wie sich zeigte, besteht auch in diesem Fall das Bedürfnis die H₂-Selektivität und die H₂O₂-Konzentration zu erhöhen.

Aufgabe der vorliegenden Erfindung ist demgemäß ein verbessertes gattungsgemäßes Verfahren aufzuzeigen, das zu einer höheren H₂-Selektivität und/oder zu einer höheren H₂O₂-Konzentration führt. Gemäß einer bevorzugten Ausführungsform sollten auch Wege aufgezeigt werden, womit der Edelmetallaustrag aus dem Reaktor mit dem wäßrigen Wasserstoffperoxid verringert und damit die Standzeit des Katalysators erhöht werden kann.

Gefunden wurde ein Verfahren zur Herstellung von Wasserstoffperoxid durch Direktsynthese, wobei Wasserstoff und Sauerstoff in Gegenwart eines heterogenen, mindestens ein Edelmetall, insbesondere Palladium, als katalytisch wirksame Komponente entaltenden Katalysators in An- oder Abwesenheit eines Lösungsmittels umgesetzt werden, das dadurch gekennzeichnet ist, daß man einen Katalysator verwendet, dessen katalytisch wirksame Komponente im wesentlichen aus Palladium oder mindestens zwei Metallen aus der Reihe der Platingruppe und 1. Nebengruppe besteht und hergestellt wurde durch Sprüh- oder Flammenpyrolyse, umfassend Überführung einer Lösung oder Suspension, enthaltend Verbindungen des einen oder der mehreren katalytisch wirksamen Metalle im entsprechenden Elementverhältnis in gelöster Form, in ein gasgetragenes Partikelkollektiv, Einbringen desselben in einen Sprühoder Flammenpyrolysereaktor, wobei die Verbindungen der katalytisch wirksamen Metalle im wesentlichen in diese Metalle oder in Legierungen desselben überführt werden, und Abtrennung der gebildeten Feststoffpartikel vom Gasstrom. Die Unteransprüche richten sich auf bevorzugte Ausführungsformen des anspruchsgemäßen Verfahrens.

Das erfindungsgemäße Verfahren kann durchgeführt werden unter Einsatz der katalytisch wirksamen Komponente, also des durch Sprüh- oder Flammenpyrolyse erhaltenen Palladiums oder der Edelmetallegierung, oder einer Kombination katalytisch wirksamer Komponenten. Alternativ hierzu und im allgemeinen bevorzugt werden diese katalytisch wirksamen Metalle oder Legierungen in trägergebundener Form eingesetzt. Bei den Trägern kann es sich um partikelförmige Materialien handeln, wie Pulver, Extrudate, Granulate oder andere aus einem pulverförmigen Material gebildete Formkörper. Zur Herstellung der die katalytisch wirksame Komponente(n) enthaltenden trägergebundenen Katalysatoren lassen sich an sich bekannte Verfahren verwenden. So ist es möglich, die durch Sprüh- und vorzugsweise durch Flammenpyrolyse erzeugten Pulver der katalytisch wirksamen Komponente mit einem pulverförmigen Trägermaterial zu vermischen, zu plastifizieren, zu verformen und danach durch eine Kalzination die Formkörper zu verfestigen. Zum anderen ist es auch möglich, das Metallpulver mit einem Träger zu vermischen und zu tablettieren. Zusätzlich ist es möglich, die pulverförmige(n) katalytische(n) Komponente(n) in einer geeigneten Flüssigkeit zu dispergieren und einen bereits vorgefertigten geformten Träger hiermit zu imprägnieren. Dabei kann, abhängig von der Art des Vorgehens, ein weitgehend mit Metall durchtränkter Katalysator ebenso resultieren wie ein sogenannter eggshell-Katalysator, in welchem sich das Metall nur in der äußersten Zone des Trägers befindet, oder auch ein sogenannter sub-surface-shell-Katalysator, in welchen der Kern und die äußerste Schale des Trägers weitgehend frei von der katalytischen Komponente sind. Die Herstellung der trägergebundenen Katalysatoren aus dem Trägermaterial und der/den katalytisch wirksamen Komponente(n) kann in Gegenwart oder in Abwesenheit von organischen oder anorganischen Bindemitteln erfolgen. Geeignete Bindemittel sind beispielsweise Wasserglas, Calciumoxalat, Borsäuren und andere glasbildende Zusammensetzungen. Organische Bindemittel welche allerdings für den gattungsgemäßen Zweck weniger geeignet sind, sind beispielsweise Polyolefine und Fluorpolymere und Organosilane. Eine gute Fixierung der katalytisch wirksamen Komponente am Träger ist auch durch eine Kalzinierung möglich wobei die Kalzinierung zweckmäßigerweise bei einer Temperatur oberhalb 200 °C, insbesondere bei 300 bis 600 °C und besonders bevorzugt bei 400 bis 600 °C durchgeführt wird. Durch einen Kalzinierungsschritt und besonders bevorzugt durch die Verwendung von Bindemitteln, oder eine Kombination dieser Maßnahmen werden trägergebundene Edelmetallkatalysatoren erhalten, welche im gattungsgemäßen Verfahren mit dem wäßrigen Wasserstoffperoxid wesentlich weniger und vorzugsweise keine Edelmetalle austragen, als dies bei Verwendung vieler vorbekannter Katalysatoren der Fall war.

Die Herstellung der mindestens ein Edelmetall enthaltenden katalytisch wirksamen Komponente mittels der sogenannten Sprühpyrolysetechnik oder der Flammenpyrolysetechnik ist der Fachwelt bekannt. So zeigt die EP-A 0 591 881 ein Verfahren zur Herstellung von feinen Edelmetallpulvern durch Sprühpyrolysetechnik: Hierbei wird eine Lösung einer thermisch zersetzbaren Edelmetallverbindung oder eines Gemisches solcher Verbindungen in einem flüchtigen Lösungsmittel in ein Aerosol überführt, dieses in einem inerten Trägergas in einem Pyrolysereaktor bei einer Temperatur oberhalb der Zersetzungstemperatur der Edelmetallverbindung(en) und unterhalb des Schmelzpunktes des Edelmetalls oder der Edelmetallegierung behandelt und anschließend das gebildete feinteilige Metall oder die Metallegierung vom Trägergas abgetrennt. Der Pyrolysereaktor kann gemäß EP-A 0 593 167 auch bei einer Temperatur oberhalb des Schmelzpunktes des Edelmetalls oder der Edelmetallegierung betrieben werden.

Bei der sogenannten Flammenpyrolyse wird das Aerosol aus feinsten Tröpfchen einer Lösung oder Suspension in einen Flammenreaktor eingespeist, beispielsweise in eine Knallgasflamme gemäß J.Chem.Soc. Japan (1987), Vol.12, S. 2293-2300 oder in die Flamme eines Flammenreaktors gemäß DE-PS 195 45 455, in welchem der Wasserstoff mit der Umgebungsluft verbrennt. Der Vorteil der in einem Flammenreaktor gewonnenen Edelmetallpulver ist in ihrer sehr hohen Gleichmäßigkeit bezüglich der Zusammensetzung und in ihrer sehr gleichmäßigen Form zu sehen. Zusätzlich wird ein sehr enges Kornspektrum erzeugt.

Gemäß einer weiteren Ausführungsform des erfindungsgemäßen Verfahrens werden trägergebundene Edelmetallkatalysatoren verwendet, wobei nicht nur die katalytisch wirksame Komponente durch Flammenpyrolyse erzeugt wurde, sondern gleichzeitig auch das Trägermaterial, das ein oxidisches oder silikatisches Material ist. Derartige Katalysatoren lassen sich gemäß DE-A 196 47 038 gewinnen, indem die in ein Aerosol zu überführende Lösung außer einer oder mehreren Edelmetallverbindungen zusätzlich eine oder mehrere oxid- und/oder silikatbildende Vorstufen enthält. Im Pyrolysereaktor bilden sich aus diesen Vorstufen oxidische oder silikatische Trägerpartikel mit auf und/oder in den Teilchen feinst verteilten Partikeln Edelmetall oder Edelmetallegierung.

Gemäß einer weiteren Alternative lassen sich geeignete trägergebundene Katalysatoren für das gattungsgemäße Verfahren auch dadurch gewinnen, daß man dem Flammenpyrolysereaktor oder einem durch ein elektrisches Plasma und/oder induktives Plasma beheizten Reaktor ein Aerosol zuführt dessen feinste Tröpfchen außer einer oder mehreren gelösten Edelmetallverbindungen das ungelöste Trägermaterial in feinstteiliger Form enthalten. Bei dieser Ausführungsform schlagen sich auf der Oberfläche der Trägerpartikel die katalytisch wirksamen Edelmetallpartikel nieder und werden darauf fest fixiert. Diese Ausführungsform wird in der DE 198 21 144.9 beschrieben, und der Inhalt dieses Dokuments wird in die Offenbarung der vorliegenden Anmeldung einbezogen.

Außer dem als besonders wirksam bekannten Palladium als Katalysator enthalten die Katalysatoren vorzugsweise Promotoren aus der Reihe Platin, Rhodium, Iridium, Kupfer, Silber und Gold. Gemäß einer bevorzugten Ausführungsform des erfindungsgemäßen Verfahrens wird ein Katalysator verwendet, dessen katalytisch wirksame Komponente eine Palladiumlegierung ist, welche im wesentlichen, mindestens 80 Gew.-% Palladium und 0,05 bis 15 Gew.-% Gold und/oder 0,05 bis 15 Gew-% Platin und 0 bis 5 Gew.-% Silber und gegebenenfalls übliche Verunreinigungen enthält. Besonders geeignete Trägermaterialien sind oxidische und silikatische Träger, insbesondere Al₂O₃, TiO₂, ZrO₂, SnO₂, SiO₂, Ce₂O₃ und Zeolithe.

Wie sich durch Vergleichsversuche zeigte, lassen sich die anspruchsgemäß zu verwendenden Katalysatoren zur Durchführung unterschiedlicher, an sich aber bekannter Direktsyntheseverfahren zur Herstellung von Wasserstoffperoxid in Gegenwart einer wäßrigen oder alkoholischen (DE-A 196 42 770) Phase verwenden. In analoger Weise läßt sich das Verfahren auch gemäß WO 97/32812 in Abwesenheit jeglichen Lösungsmittels durchzuführen, wobei das durch ein Katalysator-Festbett strömende Reaktionsgasgemisch an Wasser und Wasserstoffperoxid ungesättigt ist und gebildetes Wasserstoffperoxid in einer nachgeschalteten Separationsstufe vom Reaktionsgas abgetrennt wird.

Die Vorteile des erfindungsgemäßen Verfahrens bestehen darin, daß es möglich geworden ist, durch die spezielle Auswahl des Katalysators die Selektivität und/oder die erreichbare Wasserstoffperoxidkonzentration signifikant zu erhöhen. Diese Wirksamkeitssteigerung des katalytischen Systems war überraschend, weil die Oberfläche der katalytisch wirksamen Komponente, wie sie mittels der Sprühpyrolysetechnik oder der Flammenpyrolysetechnik erhältlich ist, wesentlich niedriger ist als jene konventioneller Katalysatoren, beispielsweise solcher, deren Herstellung einen Fällungs- und einen thermischen und/oder chemischen Reduktionsschritt umfasst.

Die Erfindung wird anhand der nachfolgenden Beispiele und Vergleichsbeispiele weiter erläutert.

### Beispiele und Vergleichsbeispiele

### Herstellung der katalytisch wirksamen Edelmetallkomponente (allgemeine Vorschrift) mittels Flammenpyrolyse

Eine wäßrige Lösung der/des Edelmetallsalze/s, insbesondere Chloride oder Nitrate in einer Gesamtkonzentration von 2,5 bis 6 Gew.-%, wird mit einem Ultraschall-Aerosolgenerator oder einem Ultraschallzerstäuber zu einem feinen Aerosol zerstäubt. Das Aerosol wird mit Hilfe eines Trägergases (Luft oder Stickstoff) durch eine Tröpfchenfalle geführt, die Tröpfchen mit einem Durchmesser >10 µm werden rezykliert. Danach gelangt das Aerosol in eine Vortrocknung, in der es thermisch behandelt wird, wobei die Temperatur zwischen 100 und 200 °C liegt und die Verweilzeit zwischen 1 und 10 Sekunden beträgt.

Anschließend wird das Aerosol in einen geschlossenen Reaktor mit folgenden Parametern geführt.

Reaktorlänge: 1000 mm, mittlere Weite: 125 mm, Aerosoldüse im Reaktor: d = 46 mm; H₂-Ringdüse von 52 - 54 mm, Luft-Ringdüse von 61 auf 80 mm. Der Reaktor enthält 3 Temperaturmeßsonden (oben, Mitte, unten). Als Brennergas wird H₂ verwendet.

Für die Darstellung der Legierungen liegen die Temperaturen im Reaktor unterhalb des Schmelzpunktes dieser Produkte im Temperaturbereich von 900 - 1050 °C am oberen Meßpunkt. Danach kann die Temperatur im Flammenreaktor bis zum unteren Meßpunkt bis auf 580 °C absinken. Die Legierungen werden mittels eines Keramikfilters vom Pyrolysegas abgetrennt. Die Beispiele 1.1 bis 1.4 enthalten die Einstellparameter und einige Katalysator-Stoffdaten.

### Beispiel 1.1

Einsatzlösung: HCl-saure, Pd-, Au-, Ag- und Rh-haltige wäßrige Lösung (pH = 1,5 - 2); Edelmetallgehalt 4 Gew.-%.

| Verfahrensparameter | |
|---|---|
| Temperatur Vortrocknung | 150 °C |
| Brenngas (H₂) | 1600 l/h |
| Gesamtgasmenge | 5100 l/h |
| Lambda (O₂ / H2) | 1,41 |
| Verweilzeit (Flammenrohr) | 2,7 sec |
| Verweilzeit (Vortrocknung) | 2,8 sec |

| Pulverdaten | |
|---|---|
| Mittlere Korngröße (Coulter) | 0,95 µm |
| Kornverteilung | 0,15 - 3,9 µm |
| RFA | Pd: 96,75 %, Au: 0,25 %, Ag: 0,2 % Rh: 0,09 % |

### Beispiel 1.2

Einsatzlösung HCl-saure,Pd- und Au-haltige wäßrige Lösung (pH = 1,5 - 2); Edelmetallgehalt 6 Gew.-%.

| Verfahrensparameter | |
|---|---|
| Temperatur Vortrocknung | 150 °C |
| Brenngas (H₂) | 1600 l/h |
| Gesamtgasmenge | 5500 l/h |
| Lambda (O₂ / H₂) | 1,40 |
| Verweilzeit (Flammenrohr) | 2,4 sec |
| Verweilzeit (Vortrocknung) | 3,2 sec |

| Pulverdaten | |
|---|---|
| Mittlere Korngröße (Coulter) | 1,62 µm |
| Kornverteilung | 0,08 - 7 µm |
| RFA | Pd: 95,0 %, Au: 5 % |
| BET-Oberfläche (m²/g) | 4,7 |
| Kornform (REM) | Agglomerate kugelförmiger Teilchen |

### Beispiel 1.3

Einsatzlösung: HCl-saure, Pd-, Au- und Ag-haltige wäßrige Lösung (pH = 1,5 - 2); Edelmetallgehalt 4 Gew.-%.

| Verfahrensparameter | |
|---|---|
| Temperatur Vortrocknung | 150 °C |
| Brenngas (H₂) | 1600 l/h |
| Gesamtgasmenge | 4300 l/h Reaktorgas + 700 l/h Quenchgas |
| Lambda (O₂ / H₂) | 1,40 |
| Verweilzeit (Flammenrohr) | 3,3 sec |
| Verweilzeit (Vortrocknung) | 3,3 sec |

| Pulverdaten | |
|---|---|
| Mittlere Korngröße (Coulter) | 0,63 µm, bimodale Kornverteilung |
| | |
| Kornverteilung | 0,16 - 3,6 µm |
| RFA | Pd: 89,13 %, Ag: 1,78 %; |
| | |
| | Au: 0,22 % Chlor: 8,84 %; Spuren an Rh, Cr, Fe, Hf, Cu |
| | |
| BET-Oberfläche (m²/g) | 5,4 |
| Kornform (REM) | Agglomerate kugelförmiger Teilchen |

### Beispiel 1.4

Einsatzlösung: Salpetersäure, Pd-, Pt- und Ag-haltige wäßrige Lösung (pH = 0,1 - 2,5); Edelmetallgehalt 6 Gew.-%.

| Verfahrensparameter | |
|---|---|
| Temperatur Vortrocknung | 150 °C |
| Brenngas (H₂) | 1300 l/h |
| Gesamtgasmenge | 4300 l/h Reaktorgas + 1200 l/h Quenchgas |
| Lambda (O₂ / H₂) | 1,40 |
| Verweilzeit (Flammenrohr) | 3,3 sec |
| Verweilzeit (Vortrocknung) | 5,1 sec |

| Pulverdaten | |
|---|---|
| Mittlere Korngröße (Coulter) | 0,45 µm |
| Kornverteilung | 0,04 - 8,5 µm |
| RFA | Pd: 89,91 %, Pt: 8,72 %; |
| | Ag: 0,32 % |
| BET-Oberfläche (m²/g) | 2,1 (± 0,2) |

Herstellung trägergebundener Katalysatoren (allgemeine Vorschrift).

Zum Aufbringen auf den Träger werden die Edelmetallpulver in einer Lösung (H₂O, org. Lösungsmittel) suspendiert; danach wird ein Formkörper aus einem oxidischen Trägermaterial imprägniert. Zum Verdampfen des Lösungsmittels wird der imprägnierte Formkörper in einem Ofen zuerst 2 Stunden bei 150 °C und dann eine weitere Stunde bei 300 °C erhitzt; soweit angegeben, wird kalziniert. Das Trägermaterial lag in Form eines kugelförmigen Granulats mit einem Korndurchmesser im Bereich von im wesentlich 0,15 bis 0,25 mm vor.

### Beispiel 2.1

500 g eines kommerziell erhältlichen SiO₂-Katalysatorträgers (Fa. Norton) wurden im Trockenschrank bei 180 °C über Nacht getrocknet. Danach wurde das Material in eine Schale überführt, die auf 150 °C geheizt wurde. 50 g eines Pulvers, das nach Beispiel 1.1 hergestellt worden war, wurden in 200 ml Wasser dispergiert. Die so erhaltene Suspension wurde in einem Schwung über die vorgeheizten Katalysatorträger gegossen, und das Material dann getrocknet. Es resultierte ein egg-shell-artiger Katalysator. Bei seinem Einsatz in flüssigem Medium gab er allerdings wieder Metallpartikel ab.

### Beispiel 2.2

Es wurde wie in Beispiel 2.1 verfahren, jedoch an die Trocknung eine Kalzination bei 500 °C über 4 h angeschlossen. Das so enthaltene Material gab kaum noch Metallpartikel ab.

### Beispiel 2.3

Es wurde wie in Beispiel 2.2 verfahren, der bei der Imprägnierung eingesetzten Lösung jedoch ca. 0,1 g Wasserglas als Bindemittel zugesetzt. Nach dem Tempern gab das so erhaltene Material keine Metallpartikel mehr ab.

### Beispiel 2.4

Es wurden 500 g des Trägers gemäß Beispiel 2.1 mit Wasser getränkt, bis die Poren gefüllt waren. Dann wurde eine wässrige Suspension, die aus ca. 0,2 g Wasserglas, 50 g Metallpulver nach Beispiel 1.1 und 150 ml Wasser bestand, zu dem Träger gegeben und das Wasser in einem Rotationsverdampfer langsam entfernt.

Nach dem Trocknen schloß sich eine Calcination bei 500 °C über 4 h an. Nach dem Tempern gab das so erhaltene Material keine Metallpartikel ab.

### Direktsynthese von Wasserstoffperoxid

Die verschiedenen Katalysatoren wurden im Verfahren gemäß EP-A 0 579 109 in einem Rieselbettreaktor sowie gemäß DE-A 41 27 918 in einem Rührautoklav getestet. Die in Beispielen der vorbekannten Verfahren eingesetzten Katalysatoren waren ein handelsüblicher Katalysator, nämlich 2 % Pd auf Aktivkohle im Rieselbettreaktor und ein Pd/Au-Katalysator im Rührreaktor.

Der nachfolgenden Tabelle 1 sind die Reaktionsbedingungen und Ergebnisse der Versuche im Rieselbett unter Einsatz des in der EP-A 0 579 109 genannten Katalysators und zweier erfindungsgemäß hergestellter Katalysatoren zu entnehmen. Der Tabelle 2 sind in entsprechender Weise die Ergebnisse der Versuche im Rührreaktor und zu Vergleichszwecken die Daten des besten Beispiels (35) der DE-A 41 27 919 zu entnehmen.

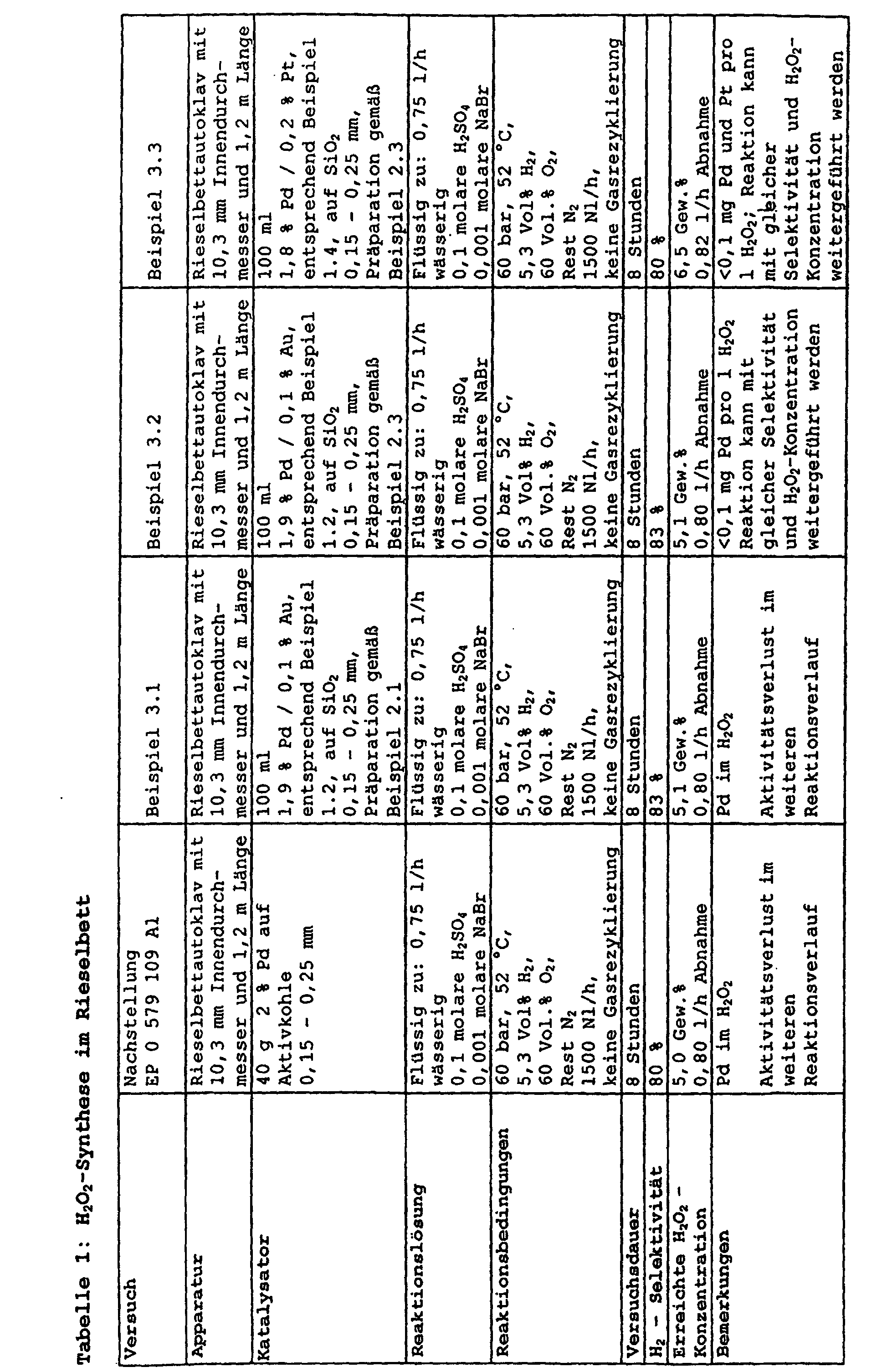

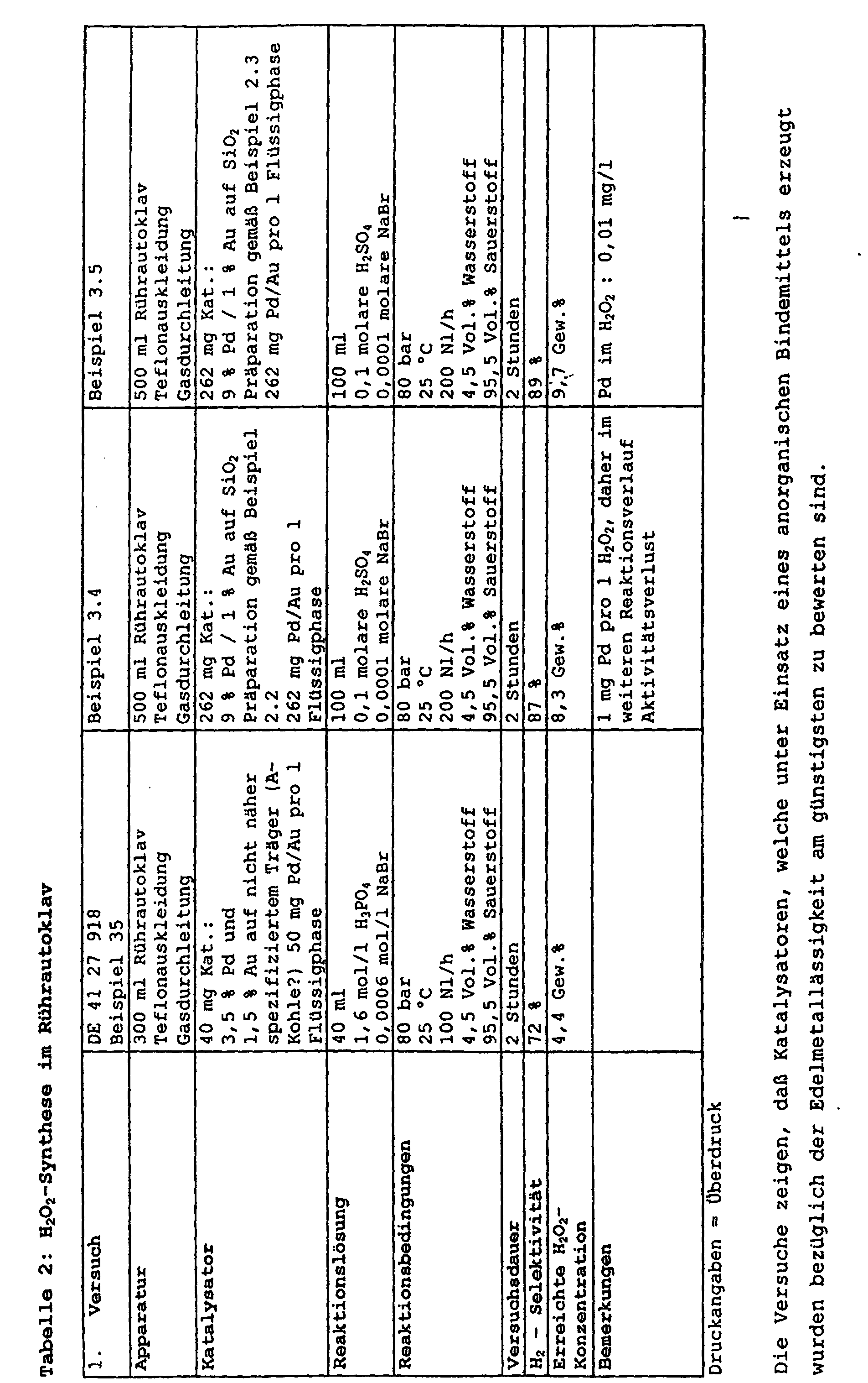

## Patentansprüche

1. Verfahren zur Herstellung von Wasserstoffperoxid durch Direktsynthese, wobei Wasserstoff und Sauerstoff in Gegenwart eines heterogenen, mindestens ein Edelmetall, insbesondere Palladium, als katalytisch wirksame Komponente enthaltenden Katalysators in An- oder Abwesenheit eines Lösungsmittels umgesetzt werden,
**dadurch gekennzeichnet,**
**daß** man einen Katalysator verwendet, dessen katalytisch wirksame Komponente im wesentlichen aus Palladium oder mindestens zwei Metallen aus der Reihe der Platingruppe und 1. Nebengruppe besteht und hergestellt wurde durch Sprüh- oder Flammenpyrolyse, umfassend Überführung einer Lösung oder Suspension, enthaltend Verbindungen des einen oder der mehreren katalytisch wirksamen Metalle im entsprechenden Elementverhältnis in gelöster Form, in ein gasgetragenes Partikelkollektiv,
Einbringen desselben in einen Sprüh- oder einen Flammenpyrolysereaktor, wobei die Verbindungen der katalytisch wirksamen Metalle im wesentlichen in diese Metalle oder in Legierungen desselben überführt werden, und Abtrennung der gebildeten Feststoffpartikel vom Gasstrom.

2. Verfahren nach Anspruch 1,
**dadurch gekennzeichnet,**
**daß** man einen Katalysator verwendet, dessen katalytisch wirksame Komponente eine Palladiumlegierung ist, enthaltend mindestens 80 Gew.-% Palladium und 0,05 bis 15 Gew.-% Gold und/oder 0,05 bis 15 Gew.-% Platin und 0 bis 5 Gew.-% Silber.

3. Verfahren nach Anspruch 1 oder 2,
**dadurch gekennzeichnet,**
**daß** man einen Katalysator verwendet, dessen katalytisch wirksame Komponente an/in einem Träger gebunden ist.

4. Verfahren nach Anspruch 3,
**dadurch gekennzeichnet, daß** der Träger ausgewählt ist aus der Reihe oxidischer und silikatischer Träger, insbesondere Al₂O₃, TiO₂, ZrO₂, SiO₂ und Zeolithe.

5. Verfahren nach Anspruch 3 oder 4,
**dadurch gekennzeichnet,**
**daß** man einen Trägerkatalysator verwendet, der hergestellt wurde durch Imprägnieren eines Formkörpers aus dem Trägermaterial mit einer Suspension, enthaltend die durch Flammenpyrolyse gewonnene katalytisch wirksame Komponente und bei Bedarf ein Bindemittel, und nachfolgendes Trocknen und Kalzinieren.

6. Verfahren nach einem der Ansprüche 3 bis 5,
**dadurch gekennzeichnet,**
**daß** man einen Trägerkatalysator verwendet, bei dessen Herstellung die katalytisch wirksame Komponente mittels eines anorganischen oder organischen Bindemittels, insbesondere Wasserglas, an den Träger gebunden wird.

7. Verfahren nach einem der Ansprüche 1 bis 6,
**dadurch gekennzeichnet,**
**daß** man einen trägergebundenen Katalysator verwendet, wovon mindestens ein Teil des Trägers oder eine Vorstufe desselben in dem gasgetragenen Partikelkollektiv anwesend war.

8. Verfahren nach einem der Ansprüche 1 bis 7,
**dadurch gekennzeichnet,**
**daß** man die Umsetzung in Gegenwart von Wasser und einer Mineralsäure und/oder einem Halogenid durchführt.

## Claims

1. Process for the production of hydrogen peroxide by direct synthesis, whereby hydrogen and oxygen are reacted in the presence of a heterogeneous catalyst containing at least one noble metal, in particular palladium, as the catalytically active component and in the presence or absence of a solvent,
**characterised in that**
a catalyst is used whose catalytically active component consists substantially of palladium or at least two metals from the series of the platinum group and the first subgroup and that was produced by spray or flame pyrolysis, comprising conversion of a solution or suspension containing compounds of the one or more catalytically active metals in the corresponding element ratio in dissolved form into a particle collective carried in a gas, introduction of same into a spray or flame pyrolysis reactor, whereby the compounds of the catalytically active metals are substantially converted into these metals or into alloys thereof, and separation from the gas stream of the solids particles formed.

2. Process according to claim 1,
**characterised in that**
a catalyst is used whose catalytically active component is a palladium alloy, containing at least 80 wt.% palladium and 0.05 to 15 wt.% gold and/or 0.05 to 15 wt.% platinum and 0 to 5 wt.% silver.

3. Process according to claim 1 or 2,
**characterised in that**
a catalyst is used whose catalytically active component is bonded to/in a support.

4. Process according to claim 3,
**characterised in that**
the support is selected from the series of oxidic and siliceous supports, in particular Al₂O₃, TiO₂, ZrO₂, SiO₂ and zeolites.

5. Process according to claim 3 or 4,
**characterised in that**
a supported catalyst is used that was produced by impregnation of a moulding made from the support material with a suspension containing the catalytically active component obtained by flame pyrolysis and if necessary a bonding agent, with subsequent drying and calcination.

6. Process according to one of claims 3 to 5,
**characterised in that**
a supported catalyst is used, in the production of which the catalytically active component is bonded to the support by means of an inorganic or organic bonding agent, in particular water glass.

7. Process according to one of claims 1 to 6,
**characterised in that**
a catalyst bonded to a support is used, whereof at least a part of the support or a precursor thereof was present in the particle collective carried in a gas.

8. Process according to one of claims 1 to 7,
**characterised in that**
the reaction is performed in the presence of water and a mineral acid and/or a halide.

## Revendications

1. Procédé de production de peroxyde d'hydrogène par synthèse directe, dans lequel on fait réagir de l'hydrogène et de l'oxygène en présence d'un catalyseur hétérogène, contenant au moins un métal noble, en particulier le palladium, comme composant catalytiquement actif, en présence ou en l'absence d'un solvant,
**caractérisé en ce qu'**
on utilise un catalyseur dont le composant catalytiquement actif est constitué essentiellement de palladium ou au moins de deux métaux de la série du groupe du platine et du premier groupe secondaire, et a été produit par pyrolyse par projection ou à la flamme, comprenant la transformation d'une solution ou suspension contenant des composés du ou des métaux catalytiquement actifs dans le rapport élémentaire correspondant sous forme dissoute, en un collectif de particules à support gazeux, son introduction dans un réacteur de pyrolyse par pulvérisation ou à la flamme, où les composés des métaux catalytiquement actifs sont essentiellement transformés en ces métaux ou en alliages de ces métaux, et la séparation des particules de solide formées à partir du courant gazeux.

2. Procédé selon la revendication 1,
**caractérisé en ce qu'**
on utilise un catalyseur dont le composant catalytiquement actif est un alliage de palladium, contenant au moins 80 % en poids de palladium et de 0,05 à 15 % en poids d'or et/ou de 0,05 à 15 % en poids de platine et de 0 à 5 % en poids d'argent.

3. Procédé selon la revendication 1 ou 2,
**caractérisé en ce qu'**
on utilise un catalyseur dont le composant catalytiquement actif est lié sur/dans un support.

4. Procédé selon la revendication 3,
**caractérisé en ce que**
le support est choisi dans la série des supports sous forme d'oxydes et de silicates, en particulier Al₂O₃, TiO₂, ZrO₂, SiO₂ et les zéolithes.

5. Procédé selon les revendications 3 ou 4,
**caractérisé en ce qu'**
on utilise un catalyseur support qui a été produit par imprégnation d'un article moulé à partir du support avec une suspension contenant le composant catalytiquement actif obtenu par pyrolyse à la flamme et en cas de besoin un liant, puis par séchage et calcination.

6. Procédé selon l'une des revendications 3 à 5,
**caractérisé en ce qu'**
on utilise un catalyseur support dans la production duquel on lie au support le composant catalytiquement actif au moyen d'un liant inorganique ou organique, en particulier un orthosilicate.

7. Procédé selon l'une des revendications 1 à 6,
**caractérisé en ce qu'**
on utilise un catalyseur lié à un support, au moins une partie du support ou un de ses précurseurs étant présent dans le collectif de particules porté par un gaz.

8. Procédé selon l'une des revendications 1 à 7,
**caractérisé en ce qu'**
on conduit la réaction en présence d'eau et d'un acide minéral et/ou d'un halogénure.
